# EUROPÄISCHE PATENTSCHRIFT

(11) **EP 0 602 679 B1**
(45) Veröffentlichungstag und Bekanntmachung des Hinweises auf die Patenterteilung: **27.09.1995**
(21) Anmeldenummer: 93120447.3
(22) Anmeldetag: 17.12.1993
(51) Int. Cl.: B60R 16/02

(54) **Verfahren und Vorrichtung zur Aquaplaning-Erkennung bei Fahrzeugreifen**
Process and device for aquaplaning recognition by vehicles tyres
Procédé et dispositif pour la reconnoissance de l'aquaplaning chez des pneus de véhicules

(30) Priorität: 17.12.1992 DE 4242726; 21.10.1993 DE 4335938
(43) Veröffentlichungstag der Anmeldung: 22.06.1994
(73) Patentinhaber: Continental Aktiengesellschaft, 30165 Hannover (DE)
(72) Erfinder: Prof.-Dr.-Ing Breuer, Bert, D-64342 Seeheim-Jugenheim (DE); Dipl.-Ing.Stöcker, Jörg, D 64367 Mühltal (DE); Dipl.-Ing. Roth, Jürgen, D-63877 Sailauf (DE)

(56) Entgegenhaltungen:
- EP-A- 0 005 696
- WO-A-91/08129
- DE-A- 2 400 773
- DE-A- 3 807 941
- DE-A- 3 937 966

## Beschreibung

Die Erfindung betrifft ein Verfahren zur Aquaplaning-Erkennung bei Fahrzeugreifen, wobei die Verformung in Umfangsrichtung von Profilelementen des Fahrzeugreifens beim Durchlauf durch den Reifenlatsch gemessen wird (DE-A-3 937 966).
Das Auftreten von Aquaplaning, d.h. das Aufschwimmen des Fahrzeugreifens durch Bildung eines Wasserkeils auf nasser Fahrbahn, stellt eine erhebliche Gefahr für den Fahrbetrieb eines Kraftfahrzeugs dar. Eine besondere Gefährdung ergibt sich dadurch, daß Aquaplaning ohne wesentliche, vom Fahrer erkennbare Vorwarnung auftritt.

Die für die Übertragung von Brems-, Beschleunigungs- und Seitenführungskräften erforderliche Reibung zwischen den Fahrzeugreifen und der Fahrbahn ist nur dann in ausreichendem Maße gegeben, wenn der Fahrzeugreifen beim Abrollen auf einer einen Wasserfilm aufweisenden Fahrbahn diesen Wasserfilm zumindest in einem wesentlichen Teil des Abplattungsbereichs des Reifens verdrängt, so daß dort eine unmittelbare Berührung zwischen Fahrzeugreifen und Fahrbahn gewährleistet ist. Diese Verdrängung des Wasserfilms erfolgt teilweise durch das Drainagevermögen der Fahrbahn und teilweise durch Drainage in den Profilaussparungen des Fahrzeugreifens. Da die Wassermenge, die je Zeiteinheit aus dem Reifenlatsch durch Drainage verdrängt werden kann, begrenzt ist, bildet sich mit steigender Fahrgeschwindigkeit und in Abhängigkeit von der Wasserhöhe im Einlaufbereich des Reifenlatsches ein Wasserkeil aus. Je mehr die Geschwindigkeit ansteigt, desto weiter schiebt sich der Wasserkeil unter den Reifenlatsch. Die für den sicheren Fahrbetrieb notwendigen Horizontalkräfte können dann nur noch in dem hinteren Bereich des Reifenlatsches übertragen werden, der noch nicht von dem Wasserkeil erfaßt wurde.

Je weiter der Wasserkeil in den Reifenlatsch eindringt, umso kleiner wird die Berührungsfläche zwischen dem Fahrzeugreifen und der Fahrbahn. Schließlich schwimmt der Fahrzeugreifen auf einem hydrodynamischen Wasserfilm auf. In diesem als "Aquaplaning" bezeichneten Zustand können nahezu keine Horizontalkräfte mehr übertragen werden. Durch den Wegfall der Seitenführungskräfte und der möglichen Bremskräfte ist das Fahrzeug in diesem Zustand nicht mehr beherrschbar.

Da der Fahrer die Gefahr von Aquaplaning erst durch den weitgehenden Wegfall der Seitenführungskräfte im Lenkverhalten spürt, mangelt es an ausreichender Vorwarnung. Der Fahrer kann nur aus dem Vorhandensein eines Wasserfilms auf der Fahrbahn und aus der jeweiligen Fahrgeschwindigkeit ganz global abschätzen, ob die Gefahr von Aquaplaning besteht.

Aufgabe der Erfindung ist es daher, ein Verfahren der eingangs genannten Gattung zu schaffen, mit dem eine Früherkennung der drohenden Gefahr von Aquaplaning möglich ist.

Diese Aufgabe wird erfindungsgemäß dadurch gelöst, daß die Verformung der Profilelemente (1) in Umfangsrichtung über deren Umfangserstreckung stetig gemessen wird - wobei sich das Meßergebnis in einen ersten Bereich positiver Verformung (= Verformung im Drehsinn) und einen zweiten Bereich negativer Verformung (= Verformung entgegen dem Drehsinn) gliedert - und an einer Stelle, die etwa in der Mitte des Bereiches positiver Verformung liegt, durch Differentiation nach der Umfangslänge die Steigung des Verformungsverlaufes bestimmt wird und, daß eine Aquaplaning-Gefahr erkannt wird, wenn die Steigung des Verformungsverlaufes im ersten Bereich einen Grenzwert unterschreitet.

Die Aufgabe wird gemäß einer anderen Ausgestaltung der Erfindung dadurch gelöst, daß die Verformung der Profilelemente in Umfangsrichtung über deren Umfangserstreckung stetig gemessen wird - wobei sich das Meßergebnis in einen ersten Bereich positiver Verformung (= Verformung im Drehsinn) und einen zweiten Bereich negativer Verformung (= Verformung entgegen dem Drehsinn) gliedert - und mindestens im mittleren Drittel des Bereiches positiver Verformung durch Differentiation nach der Umfangslänge die Steigung des Verformungsverlaufes bestimmt wird, danach das Minimum dieser ersten Ableitung durch erneutes Differenzieren nach der Umfangslänge bestimmt wird und, daß eine Aquaplaning-Gefahr erkannt wird, wenn die mimimale Steigung des Verformungsverlaufes im ersten Bereich einen Grenzwert unterschreitet.

In einer gemäß Anspruch 4 bevorzugten Ausführung dieser Variante wird das Minimum der ersten Ableitung der Verformung nach der Umfangslänge in einem Bereich gesucht, der die ersten zwei Drittel des Bereiches positiver Verformung umfaßt, also nicht nur das mittlere Drittel.

Im Rahmen der Erfindung wurde erstmalig erkannt, daß aus dem Verformungsverhalten von Profilelementen im Einlaufbereich des Fahrzeuglatsches, d.h. des auf der Fahrbahn aufliegenden, abgeplatteten Bereich des Fahrzeugreifens, Rückschlüsse auf den Beginn der Bildung eines Wasserkeils möglich sind, und zwar schon in einem Fahrzustand, in dem noch eine ausreichende Reibung durch unmittelbare Berührung zwischen Fahrzeugreifen und Fahrbahn gegeben ist, so daß der Fahrer noch keinerlei Änderungen des Fahrverhaltens spüren kann.

Wenn durch eine der beiden Varianten des erfindungsgemäßen Verfahrens erkannt wird, daß sich der zeitliche Verlauf der Verformung der Profilelemente des Fahrzeugreifens beim Durchlauf durch den Reifenlatsch wesentlich und typisch ändert, insbesondere gegenüber dem zeitlichen Verformungsverlauf, der bei trockener Fahrbahn ermittelt wurde, abweicht, so kann gemäß Anspruch 6 ein Signal ausgelöst werden, das dem Fahrer die drohende Gefahr vom Aquaplaning anzeigt. Der Fahrer weiß dann, daß bei einer Steigerung der Fahrgeschwindigkeit und/oder bei einer Vergrößerung der Dicke des Wasserfilms auf der Fahrbahn Aquaplaning auftreten kann; der Fahrer kann dann sein Fahrverhalten entsprechend einrichten.

Stattdessen oder zusätzlich kann bei Meßergebnissen, die typisch sind für eine Aquaplaning-Gefahr, gemäß Anspruch 7 ein aktives Sicherheitssystem des Fahrzeugs ausgelöst werden, beispielsweise zur Reduzierung der Fahrgeschindigkeit.

In beiden Verfahrensvarianten ist vorgesehen, daß eine bestimmte kontinuierlich gemessene Größe mit einem Grenzwert verglichen wird, und zwar im Falle der Lösung gemäß Anspruch 1 mit einem Grenzwert für die Steigung des Verformungsverlaufes an einer Stelle etwa in der Mitte des Bereiches positiver Verformung und im Falle der Lösung gemäß Anspruch 2 mit einem Grenzwert für die minimale Steigung des Verformungsverlaufes im Bereich positiver Verformung.
Der jeweilig vorzugebende Grenzwert wird zweckmäßigerweise aus einem Vergleich mit den entsprechenden Meßergebnissen bei trockener Fahrbahn gewonnen.

Bei beiden Lösungen wird also auf den Bereich positiver Verformung abgestellt. Darunter wird definitionsgemäß der Bereich verstanden, wo sich die Profilelemente im Drehsinn verformen, also entgegen der Fahrtrichtung. Die zu messenden Spannungen versuchen, die Klötze im Drehsinn zurückzuhalten, was ihnen umso vollständiger gelingt, desto schlechter der Reibschluß zur Straße ist. Der Verformungsbereich, auf den abgestellt wird, befindet sich im Einlaufbereich des Reifenlatsches.

Gemäß einer besonders vorteilhaften Ausgestaltung der Erfindung - egal nach welcher der beiden Varianten - ist vorgesehen, daß gemäß Anspruch 5 im Bereich positiver Verformung festgestellt wird, ob der Verformungsverlauf im besagten Bereich ein oder zwei relative Maxima aufweist, und im Falle von zwei relativen Maxima der Quotient (später KA genannt) aus der Höhe des im Drehsinn ersten relativen Maximums und des nachfolgenden relativen Maximums bestimmt und mit einem Grenzwert verglichen wird, und, daß bei Überschreiten dieses Grenzwertes eine Aquaplaning-Gefahr erkannt wird. Diese Weiterbildung des Verfahrens ist besonders für eine praktische, auch industrielle Anwendung geeignet.

Eine vorteilhafte Vorrichtung zur Durchführung beider Varianten der Erfindung ist Gegenstand der Patentansprüche 8 und 9. Gemäß Anspruch 8 ist in mindestens einem Profilelement des Fahrzeugreifens ein Sender eingebettet, und an der Reifeninnenseite oder an der Fahrzeugfelge sind mehrere Empfänger angeordnet, die Abstandsänderungen zum Sender erfassen und so ein die Verformung des Profilelementes in Umfangsrichtung beschreibendes Signal an eine Auswerteeinrichtung liefern. Gemäß Anspruch 9 ist der Sender ein Permanentmagnet ist und die Empfänger sind Hallgeneratoren.

Der Kern beider Varianten der Erfindung ist, in einem bestimmten Bereich die Verformung der Profilklötze stetig zu messen und den so gewonnenen Verformungsverlauf mindestens einmal zu differenzieren. Zweckmäßigerweise erfolgen die Differentiation(en) der Verformung in Umfangsrichtung nach der Umfangslänge in einer als Rechner ausgeführten Auswerteeinrichtung.

Es ist zwar bekannt (DE-OS 39 37 966), in die Profilelemente von Fahrzeugreifen Sender einzubetten, deren Abstandsänderung zu an der Reifeninnenseite angeordneten Empfängern ein Signal liefern, das die Verformung des Profilelements beschreibt. Die so gewonnenen Signale wurden aber weder differenziert noch zur Erkennung drohender Aquaplaning-Gefahr ausgewertet.

Nachfolgend werden Ausführungsbeispiele der Erfindung anhand der Zeichnung näher erläutert. Es zeigt:
Fig. 1 in schematischer Darstellungsweise einen Teil-Längsschnitt durch den Reifenlatsch eines Fahrzeugreifens mit einer schematisch dargestellten Auswerteeinrichtung,
Fig. 2 ein Diagramm der Verformung eines Profilelements beim Durchlaufen das Reifenlatsches bei trockener Fahrbahn und beim Vorhandensein eines Wasserfilms auf der Fahrbahn bei unterschiedlichen Geschwindigkeiten,
Fig. 3 ein Diagramm, das die bei der Kurve nach Fig. 2 ermittelten Steigungen der Tangenten darstellt,
Fig. 4 ein Diagramm der Ableitungen der Kurven aus dem Diagramm nach Fig. 2,
Fig. 5 ein Diagramm, das die bei den Kurven nach Fig. 4 ermittelten Minima darstellt,
Fig. 6 ein dreiachsiges Diagramm der Reifensensorsignale (x-Signale) bei Aquaplaning und
Fig. 7 ein Diagramm der berechneten Kennwerte KA in Abhängigkeit von der Geschwindigkeit.

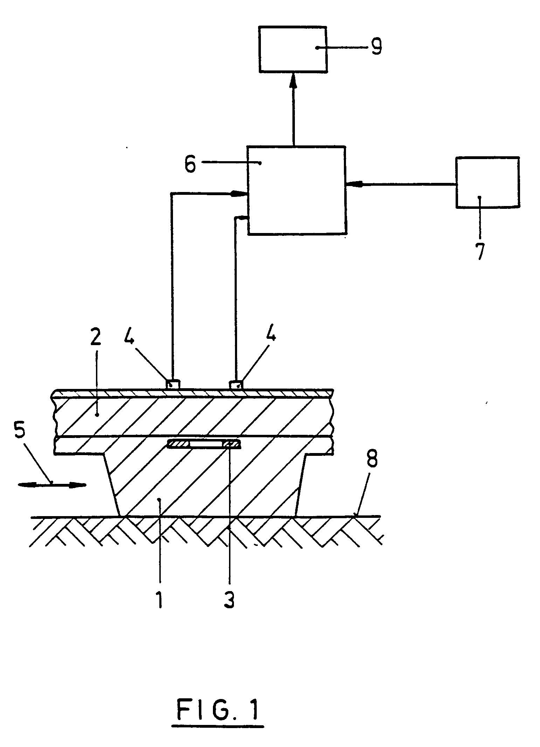

Wie in Fig. 1 dargestellt, ist in ein Profilelement (Reifenstollen) 1 eines Fahrzeugreifens 2 als Sender 3 ein Permanentmagnet eingebettet. An der Reifeninnenseite sind als Empfänger 4 mindestens zwei Hallgeneratoren angebracht, die auf Abstandsänderungen zum Sender 3 ansprechen.

Wenn dar Profilelement 1 beim Durchlaufen des Reifenlatsches in der in Fig. 1 mit einem Doppelpfeil 5 gekennzeichneten Umfangsrichtung des Fahrzeugreifens 2 verformt wird, ergeben sich Abstandsänderungen zwischen dem Permanentmagneten 3 und den Hallgeneratoren 4. Diese liefern an eine in Fig. 1 nur schematisch angedeutete Auswerteeinrichtung 6 jeweils ein Signal (x-Signal), das diese Abstandsänderungen und damit die Verformung des Reifenelements 1 in Umfangsrichtung beschreibt.

In der als Rechner ausgeführten Auswerteeinrichtung 6 wird aus dem so ermittelten Signalverlauf der positive Impuls der Profilelementverformung im Einlaufbereich des Reifenlatsches entgegen der Drehrichtung des Reifens herausgegriffen; in der Mitte dieses positiven Impulses wird die Steigung des Signalverlaufs festgestellt, d.h. an die Kurve des Signalverlaufs wird eine Tangente angelegt. Die Steigung dieser Tangente ist ein Maß für die jeweilige Aquaplaning-Gefahr. Deshalb wird der an dieser Stelle festgestellte Steigungswert mit einem durch eine Eingabevorrichtung 7 eingegebenen Schwellenwert verglichen, und es wird ein die Aquaplaning-Gefahr anzeigendes Signal ausgelöst, wenn der so festgestellte Steigungswert den Schwellenwert unterschreitet.

Der Schwellenwert wird so gewählt, daß das Signal ausgelöst wird, wenn die beginnende Ausbildung eines Wasserkeils zwischen der Berührungsfläche des Fahrzeugreifens 1 und der Fahrbahnoberfläche 8 am Anfang des Reifenlatsches so weit fortgeschritten ist, daß die Gefahr von Aquaplaning besteht. Das Signal wird an eine Anzeige- oder Alarmeinrichtung 9 geliefert und löst dort ein optisches und/oder akustisches Warnsignal für den Fahrer aus. Zusätzlich oder unabhängig davon kann auch vorgesehen sein, daß das Signal ein aktives Sicherheitssystem des Fahrzeugs auslöst, beispielsweise eine Steuereinrichtung, die die Fahrgeschwindigkeit vermindert.

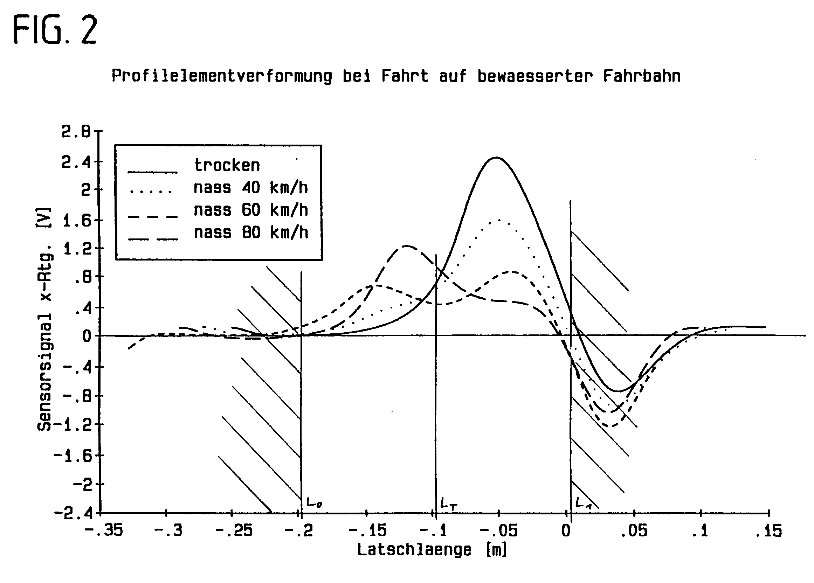

Fig. 2 zeigt die Signalverläufe, die die Verformung eines Profilelements beim Durchlaufen des Reifenlatsches in positiver Umfangsrichtung, d.h. entgegen der Drehrichtung des Fahrzeugreifens darstellen, und zwar - mit unterschiedlichen Strichen dargestellt - bei trockener Fahrbahn und bei einer Wasserhöhe von ungefähr 10 mm bei unterschiedlichen Geschwindigkeiten. Gleiche Signalverläufe treten auch im Auslaufbereich des Reifenlatsches in umgekehrter Richtung auf. Der positive Impuls erstreckt sich jeweils vom Beginn L₀ der Verformung bis zum Nulldurchgang L₁ des Signalverlaufs. In der mit L_{T} gekennzeichneten Mitte des positiven Impulses zwischen L₀ und L₁ wird jeweils die Tangente T an die Kurve des Signalverlaufs gelegt.

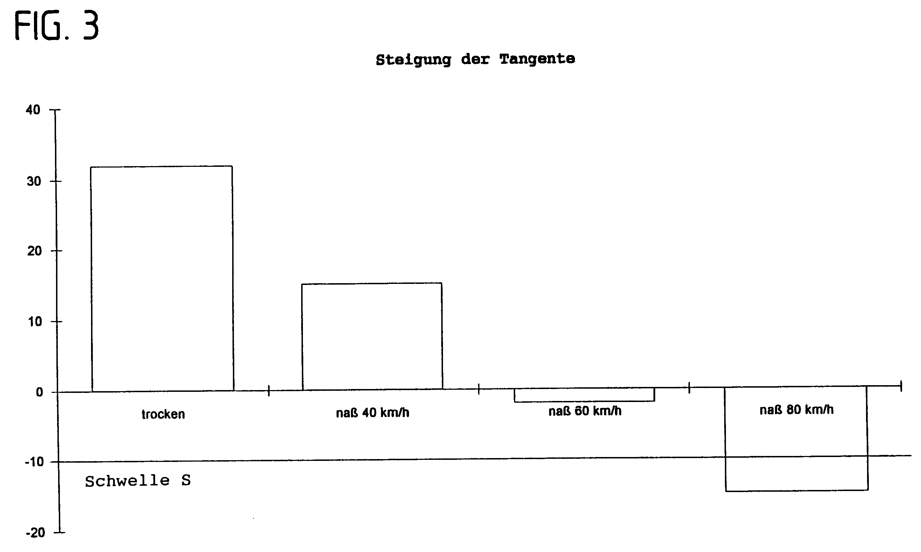

Die Steigungswerte dieser Tangenten sind in Fig. 3 dargestellt. Hierbei ist der vorgegebene Schwellenwert S eingetragen. Man erkennt, daß beim dargestellten Ausführungsbeispiel die Steigung der Tangente an den Signalverlauf bei 80 km/h und nasser Fahrbahn den Schwellenwert S unterschreitet, d.h. hier besteht die Gefahr von Aquaplaning.

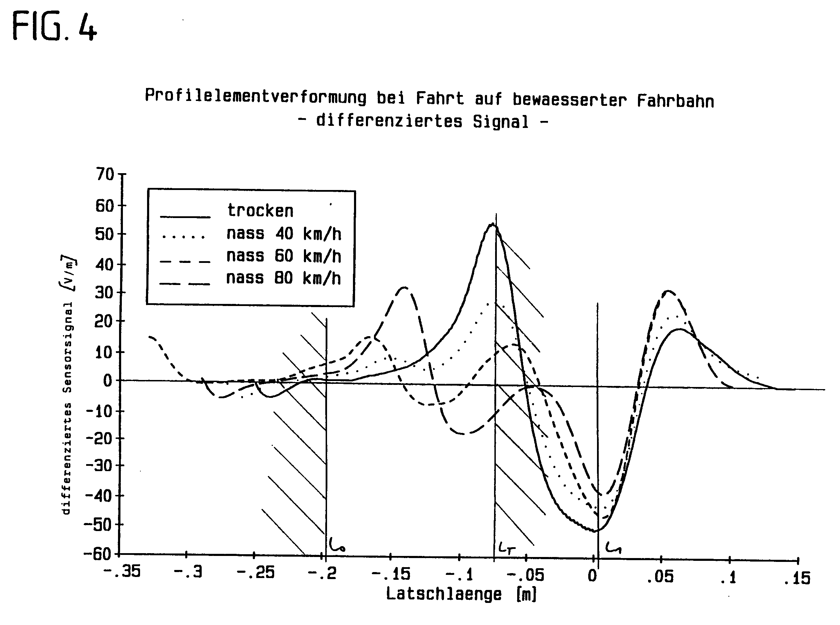

Abweichend von dem beschriebenen Beispiel kann auch vorgesehen werden, daß in der Auswerteeinrichtung 6 der ermittelte zeitliche Signalverlauf rechnerisch differenziert wird, d.h. es wird die erste Ableitung des Signalverlaufs gebildet. Diese Kurven sind in Fig. 4 wiederum für unterschiedliche Fahrbahn- und Geschwindigkeitsverhältnisse dargestellt.

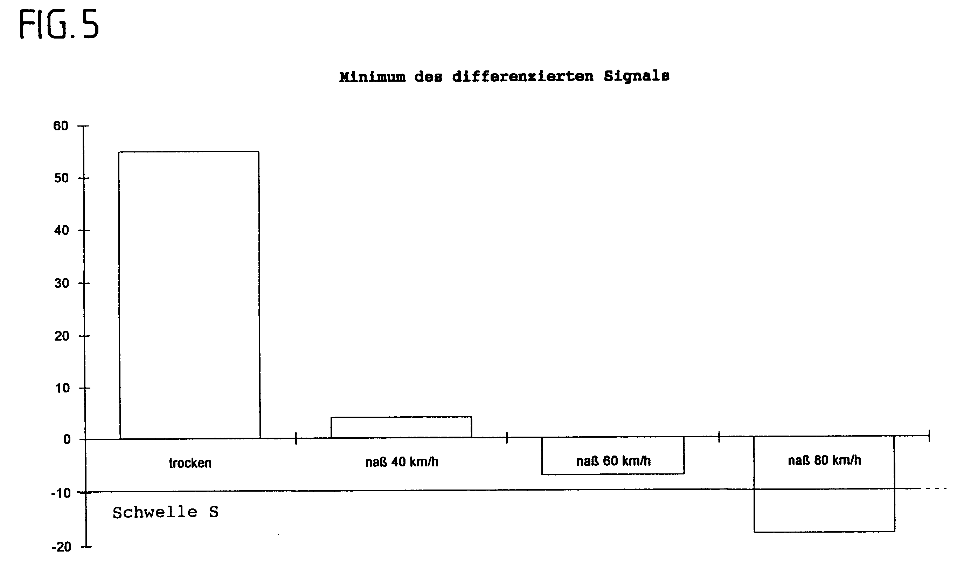

In einem Bereich, der vorzugsweise die ersten zwei Drittel des positiven Impulses des Signalverlaufs (Fig. 2) umfaßt, wird das Minimum der Amplitude der durch das Differenzieren gebildeten Ableitung (Fig. 4) festgestellt. In Fig. 5 sind diese Minima der vier Signalverläufe aus Fig. 4 aufgetragen. Man erkennt, daß auch hier das aus dem Signalverlauf für nasse Fahrbahnen bei einer Fahrzeuggeschwindigkeit von 80 km/h ermittelte Minimum den vorgegebenen Schwellenwert Sa unterschreitet, so daß in der Einrichtung 9 ein Warnsignal ausgelöst und/oder ein aktives Sicherheitssystem des Fahrzeugs aktiviert wird, weil die Gefahr von Aquaplaning besteht.

Es hat sich gezeigt, daß die nach dem zuletzt beschriebenen Verfahren ermittelten Minima der Ableitungen der Signalverläufe angenähert linear mit der Fahrgeschwindigkeit bei gleichen Fahrbahnverhältnissen verlaufen. Diese Minima geben somit unmittelbar ein Maß für die Größe der Aquaplaning-Gefahr.

Anstelle der vorstehend beschriebenen Verfahren kann die Auswertung der erhaltenen Signale vorteilhaft auch wie folgt durchgeführt werden. Aus dem vorliegenden Reifensensorsignal in Umfangsrichtung (x-Signal) wird ein Kennwert KA berechnet, der bei Überschreiten einer bestimmten Schwellenwertes ein die Aquaplaning-Gefahr anzeigendes Signal auslöst. Der Kennwert KA ist definiert als 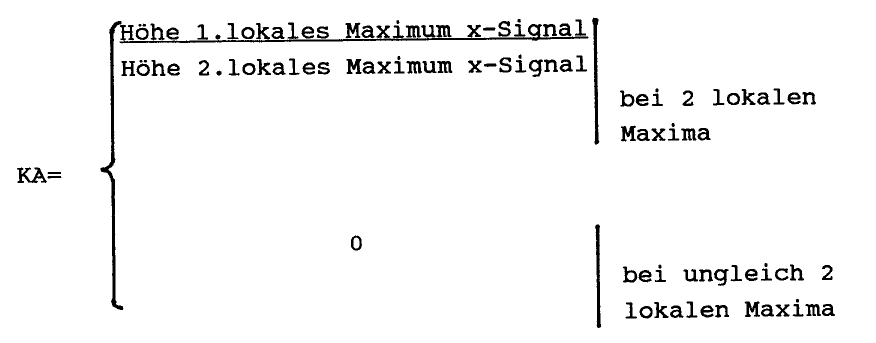
Bei Existenz von zwei lokalen Maxima des Reifensensorsignals in Umfangsrichtung ist der Kennwert KA gleich dem Quotienten zwischen der Amplitude des zeitlich ersten lokalen Maximums und der Amplitude des zeitlich zweiten lokalen Maximums. Existieren keine zwei lokalen Maxima, so ist KA gleich Null.

Der Schwellenwert wird so gewählt, daß das Signal ausgelöst wird, wenn die beginnende Ausbildung eines Wasserkeils zwischen der Berührungsfläche des Fahrzeugreifens 1 und der Fahrbahnoberfläche 8 am Anfang des Reifenlatsches so weit fortgeschritten ist, daß die Gefahr von Aquaplaning besteht (Fig.1). Das Signal wird an die Anzeige- oder Alarmeinrichtung 9 geliefert und löst dort ein optisches und/oder akustisches Warnsignal für den Fahrer aus. Zusätzlich oder unabhängig davon kann auch vorgesehen sein, daß das Signal ein aktives Sichterheitssystem des Fahrzeugs auslöst, beispielsweise eine Steuereinrichtung, die die Fahrgeschwindigkeit vermindert.

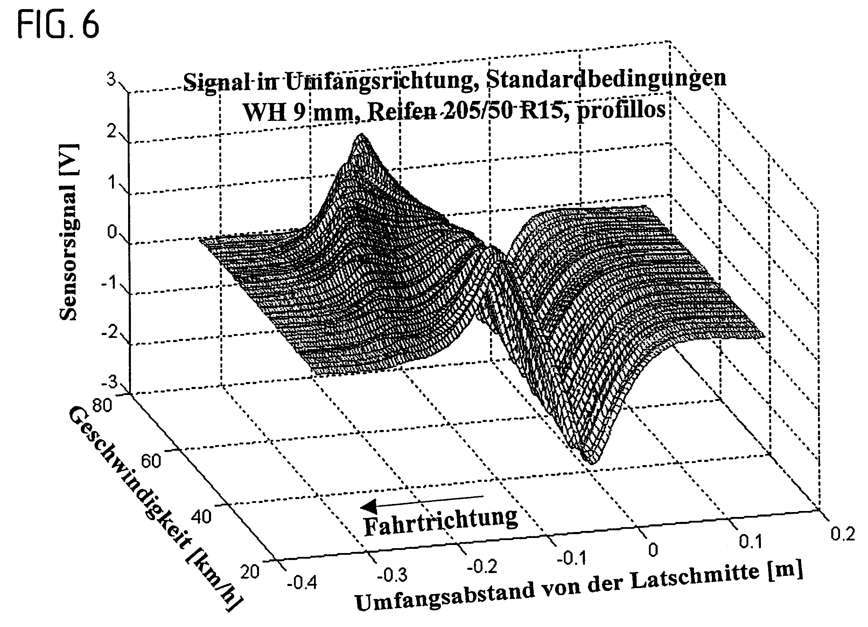

Fig. 6 zeigt die Signalverläufe, die die Verformung eines Profilelements beim Durchlaufen des Reifenlatsches in positiver Umfangsrichtung, d.h. entgegen der Drehrichtung des Fahrzeugreifens darstellen, und zwar bei einer Wasserhöhe WH von 9 mm bei unterschiedlichen Geschwindigkeiten, aufgetragen über dem Umfangsabstand von der Latschmitte.

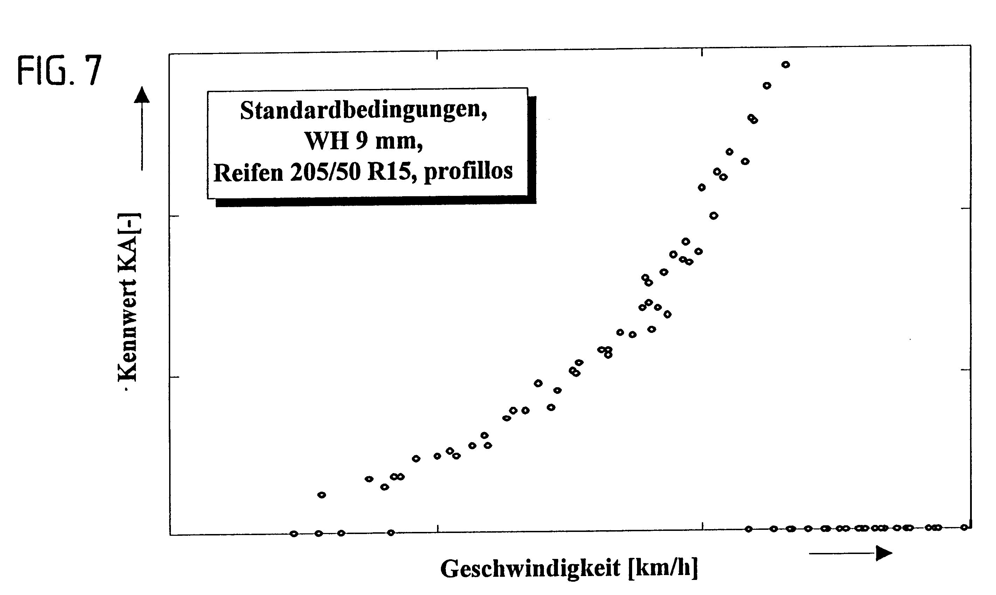

Die sich aus der Berechnung ergebenden Kennwerte KA sind für ein Ausführungsbeispiel in Fig. 7 über der Geschwindigkeit aufgetragen. Der Schwellenwert, ab dem der Kennwert KA ein die Aquaplaning-Gefahr anzeigendes Signal auslöst, wird beispielsweise empirisch ermittelt.

## Patentansprüche

1. Verfahren zur Aquaplaning-Erkennung bei Fahrzeugreifen (2), wobei die Verformung in Umfangsrichtung von Profilelementen (1) des Fahrzeugreifens (2) beim Durchlauf durch den Reifenlatsch gemessen wird,
**dadurch gekennzeichnet,** daß die Verformung der Profilelemente (1) in Umfangsrichtung über deren Umfangserstreckung stetig gemessen wird - wobei sich das Meßergebnis in einen ersten Bereich positiver Verformung (= Verformung im Drehsinn) und einen zweiten Bereich negativer Verformung (= Verformung entgegen dem Drehsinn) gliedert - und an einer Stelle, die etwa in der Mitte des Bereiches positiver Verformung liegt, durch Differentiation nach der Umfangslänge die Steigung des Verformungsverlaufes bestimmt wird, und daß eine Aquaplaning-Gefahr erkannt wird, wenn die Steigung des Verformungsverlaufes im ersten Bereich einen Grenzwert unterschreitet.

2. Verfahren zur Aquaplaning-Erkennung bei Fahrzeugreifen (2), wobei die Verformung in Umfangsrichtung von Profilelementen (1) des Fahrzeugreifens (2) beim Durchlauf durch den Reifenlatsch gemessen wird,
**dadurch gekennzeichnet,** daß die Verformung der Profilelemente (1) in Umfangsrichtung über deren Umfangserstreckung stetig gemessen wird - wobei sich das Meßergebnis in einen ersten Bereich positiver Verformung (= Verformung im Drehsinn) und einen zweiten Bereich negativer Verformung (= Verformung entgegen dem Drehsinn) gliedert - und mindestens im mittleren Drittel des Bereiches positiver Verformung durch Differentiationnach der Umfangslänge die Steigung des Verformungsverlaufes bestimmt wird, danach das Minimum dieser ersten Ableitung bestimmt wird, und daß dann eine Aquaplaning-Gefahr erkannt wird, wenn die mimimale Steigung des Verformungsverlaufes im ersten Bereich einen Grenzwert unterschreitet.

3. Verfahren nach Anspruch 1 oder 2 dadurch gekennzeichnet, daß die Differentiation(en) der Verformung in Umfangsrichtung nach der Umfangslänge in der als Rechner ausgeführten Auswerteeinrichtung (6) erfolgt.

4. Verfahren nach Anspruch 2, dadurch gekennzeichnet, daß das Minimum der ersten Ableitung der Verformung nach der Umfangslänge in einem Bereich gesucht wird, der die ersten zwei Drittel des Bereiches positiver Verformung (= Verformung im Drehsinn) umfaßt.

5. Verfahren nach Anspruch 1 oder 2, dadurch gekennzeichnet, daß im Bereich positiver Verformung festgestellt wird, ob der Verformungsverlauf im besagten Bereich ein oder zwei relative Maxima aufweist, und daß im Falle von zwei relativen Maxima der Quotient (KA) aus der Höhe des im Drehsinn ersten relativen Maximums und des nachfolgenden relativen Maximums bestimmt und mit einem Grenzwert verglichen wird, und daß bei Überschreiten dieses Grenzwertes eine Aquaplaning-Gefahr erkannt wird.

6. Verfahren nach einem der vorangehenden Ansprüche, dadurch gekennzeichnet, daß bei Meßergebnissen, die typisch sind für eine Aquaplaning-Gefahr, ein optisches und/oder akustisches Warnsignal für den Fahrer ausgelöst wird.

7. Verfahren nach einem der vorangehenden Ansprüche, dadurch gekennzeichnet, daß bei Meßergebnissen, die typisch sind für eine Aquaplaning-Gefahr, ein aktives Sicherheitssystem des Fahrzeuges ausgelöst wird.

8. Vorrichtung zur Durchführung eines Verfahrens nach einem der vorgenannten Ansprüche, dadurch gekennzeichnet, daß in mindestens einem Profilelement (1) des Fahrzeugreifens (2) ein Sender (3) eingebettet ist, daß an der Reifeninnenseite oder an der Fahrzeugfelge mehrere Empfänger (4) angeordnet sind, die Abstandsänderungen zum Sender erfassen und so ein die Verformung des Profilelementes (1) in Umfangsrichtung (5) beschreibendes Signal an eine Auswerteeinrichtung (6) liefern.

9. Vorrichtung nach vorangehendem Anspruch dadurch gekennzeichnet, daß der Sender (3) ein Permanentmagnet ist und die Empfänger (4) Hallgeneratoren sind.

## Claims

1. Method of detecting aquaplaning for vehicle tyres (2), the deformation in the circumferential direction of profile elements (1) of the vehicle tyre (2) being measured during the transit through the tyre ground-engaging surface, characterised in that the deformation of the profile elements (1) in the circumferential direction is constantly measured over the circumferential extent of said elements - the result of the measurement being divided into a first region of positive deformation (= deformation in the direction of rotation) and into a second region of negative deformation (= deformation in opposition to the direction of rotation) - and the ascent of the deformation configuration is determined by differentiation according to the circumferential length at a location situated substantially in the centre of the region of positive deformation, and in that a risk of aquaplaning is detected when the ascent of the deformation configuration in the first region falls below a limit value.

2. Method of detecting aquaplaning for vehicle tyres (2), the deformation in the circumferential direction of profile elements (1) of the vehicle tyre (2) being measured during the transit through the tyre ground-engaging surface, characterised in that the deformation of the profile elements (1) in the circumferential direction is constantly measured over the circumferential extent of said elements - the result of the measurement being divided into a first region of positive deformation (= deformation in the direction of rotation) and into a second region of negative deformation (= deformation in opposition to the direction of rotation) - and the ascent of the deformation configuration is determined by differentiation according to the circumferential length in at least the centre third of the region of positive deformation, then the minimum of this first derivation is determined, and in that a risk of aquaplaning is detected when the minimum ascent of the deformation configuration in the first region falls below a limit value.

3. Method according to claim 1 or 2, characterised in that the differentiation(s) of the deformation in the circumferential direction according to the circumferential length is (are) effected in the evaluating means (6), which is configured as a computer.

4. Method according to claim 2, characterised in that the minimum of the first derivation of the deformation according to the circumferential length is sought in a region which includes the first two-thirds of the region of positive deformation (= deformation in the direction of rotation).

5. Method according to claim 1 or 2, characterised in that, in the region of positive deformation, it is ascertained whether the deformation configuration in said region has one or two relative maxima, and in that, if there are two relative maxima, the quotient (KA) is determined from the magnitude of the first relative maximum, when viewed with respect to the direction of rotation, and of the subsequent relative maximum and compared with a limit value, and in that a risk of aquaplaning is detected if this limit value is exceeded.

6. Method according to one of the preceding claims, characterised in that, in the case of measurement results which are typical for a risk of aquaplaning, a visual and/or an acoustic warning signal is triggered for the driver.

7. Method according to one of the preceding claims, characterised in that, in the case of measurement results which are typical for a risk of aquaplaning, an active safety system of the vehicle is triggered.

8. Apparatus for accomplishing a method according to one of the above-mentioned claims, characterised in that a transmitter (3) is embedded in at least one profile element (1) of the vehicle tyre (2), in that a plurality of receivers (4) are disposed on the inside of the tyre or on the vehicle rim, which receivers detect changes in the spacing relative to the transmitter and thus supply to an evaluating means (6) a signal which describes the deformation of the profile element (1) in the circumferential direction (5).

9. Apparatus according to the preceding claim, characterised in that the transmitter (3) is a permanent magnet, and the receivers (4) are Hall generators.

## Revendications

1. Procédé pour identifier les phénomènes d'aquaplanning au niveau de pneumatiques (2) d'un véhicule, la déformation dans la direction circonférentielle des éléments profilés (1) du pneumatique (2) du véhicule étant mesurée lors du cheminement dans la surface d'appui du pneumatique,
caractérisé en ce que la déformation des éléments profilés (1) dans la direction circonférentielle est mesurée en permanence sur leur étendue circonférentielle - le résultat de mesure étant réparti entre une première zone a déformation positive (= déformation dans le sens de rotation) et une seconde zone à déformation négative (= déformation en sens opposé du sens de rotation) - la pente de la courbe de variation de la déformation est déterminée en un emplacement, qui est situé approximativement au centre de la zone à déformation positive, par différentiation par rapport à la longueur circonférentielle, et qu'un risque d'aquaplanning est identifié lorsque la courbe de variation de la déformation dans la première zone tombe au-dessous d'une valeur limite.

2. Procédé pour identifier les phénomènes d'aquaplanning au niveau de pneumatiques (2) d'un véhicule, la déformation dans la direction circonférentielle des éléments profilés (1) du pneumatique (2) du véhicule étant mesurée lors du cheminement dans la surface d'appui du pneumatique,
caractérisé en ce que la déformation des éléments profilés (1) dans la direction circonférentielle est mesurée en permanence dans la direction circonférentielle, sur son étendue circonférentielle - le résultat de mesure étant réparti entre une première zone à déformation positive (= déformation dans le sens de rotation) et une seconde zone à déformation négative (= déformation en sens oppose du sens de rotation) - et la pente de la courbe de variation de la déformation est déterminée au moins dans le tiers médian de la zone à déformation positive, par différentiation par rapport à la longueur circonférentielle, puis le minimum de cette dérivée première est déterminé, et qu'un risque d'aquaplanning est identifié lorsque la pente minimale de la courbe de variation de la déformation tombe au-dessous d'une valeur limite dans la première zone.

3. Procédé selon la revendication 1 ou 2, caractérisé en ce que la ou les différentiations, par rapport à la longueur circonférentielle, de la déformation dans la direction circonférentielle est calculée dans le dispositif d'évaluation (6) réalisé sous la forme d'un calculateur.

4. Procédé selon la revendication 2, caractérisé en ce que le minimum de la dérivée première, par rapport a la longueur circonférentielle, de la déformation est recherché dans une zone qui englobe les deux premiers tiers de la zone à déformation positive (= déformation dans le sens de rotation).

5. Procédé selon la revendication 1 ou 2, caractérisé en ce que dans la zone à déformation positive, une détermination est faite pour savoir si la courbe de variation de la déformation de ladite zone possède un ou deux maxima relatifs, et que dans le cas de deux maxima relatifs, le quotient (KA) entre la hauteur du premier maximum relatif dans le sens de rotation et la hauteur du maximum relatif suivant est déterminé et est comparé à une valeur limite, et qu'un risque d'aquaplanning est identifié lors du dépassement de cette valeur limite par valeurs supérieures.

6. Procédé selon l'une des revendications précédentes, caractérisé en ce que dans le cas de résultats de mesure, qui sont typiques pour un risque d'aquaplanning, un signal d'avertissement optique et/ou acoustique est délivré au conducteur.

7. Procédé selon l'une des revendications précédentes, caractérisé en ce que dans le cas de résultats de mesure, qui sont typiques pour un risque d'aquaplanning, un système actif de sécurité du véhicule est déclenché.

8. Procédé selon l'une des revendications précédentes, caractérisé en ce qu'un émetteur (3) est inséré dans au moins un élément profilé (1) du pneumatique (2) du véhicule, que sur le côté intérieur du pneumatique ou sur la jante de la roue sont disposés plusieurs récepteurs (4), qui détectent des variations de distance par rapport à l'émetteur et ainsi envoient à un dispositif d'évaluation (6), un signal, qui décrit la déformation de l'élément profilé (1) dans la direction circonférentielle (5).

9. Dispositif selon la revendication précédente, caractérisé en ce que l'émetteur (3) est un aimant permanent et que les récepteurs (4) sont des générateurs de Hall.
